(19) Europäisches Patentamt
European Patent Office
Office européen des brevets

(11) EP 4 692 164 A1

(12) **EUROPEAN PATENT APPLICATION**
published in accordance with Art. 153(4) EPC

(43) Date of publication:
**11.02.2026 Bulletin 2026/07**

(21) Application number: **24779528.9**

(22) Date of filing: **14.03.2024**

(51) International Patent Classification (IPC):
***C08G 64/02*** *(2006.01)* ***C08F 299/02*** *(2006.01)*
***H01M 4/13*** *(2010.01)* ***H01M 4/62*** *(2006.01)*
***H01M 50/414*** *(2021.01)*

(52) Cooperative Patent Classification (CPC):
**C08F 299/02; C08G 64/02; H01M 4/13; H01M 4/62; H01M 50/414;** Y02E 60/10

(86) International application number:
**PCT/JP2024/010058**

(87) International publication number:
**WO 2024/203399 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023058806**

(71) Applicant: **LINTEC CORPORATION**
**Itabashi-ku**
**Tokyo 173-0001 (JP)**

(72) Inventors:
- **MORIOKA, Takashi**
  **Tokyo 173-0001 (JP)**
- **WATANABE, Yasutaka**
  **Tokyo 173-0001 (JP)**
- **HASHIMOTO, Sae**
  **Tokyo 173-0001 (JP)**
- **GODA, Hideki**
  **Kobe-shi, Hyogo 651-0093 (JP)**

(74) Representative: **Gille Hrabal Partnerschaftsgesellschaft mbB**
**Patentanwälte**
**Brucknerstraße 20**
**40593 Düsseldorf (DE)**

(54) **RESIN COMPOSITION, BINDER RESIN, POLYMER THIN FILM AND BATTERY**

(57) A resin composition containing a copolymer, the copolymer including a constituent unit represented by a formula (1) below and 0.3 mol% or more and 20.0 mol% or less of a constituent unit represented by a formula (2) below,

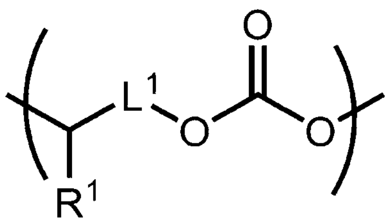

(1)

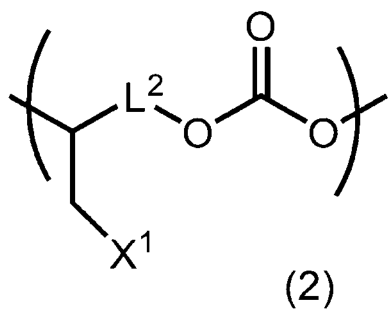

(2)

where, in the formulae (1) and (2): $R^1$ is a hydrogen atom or an alkyl group having 1 to 3 carbon atoms; $L^1$ and $L^2$ are each independently a single bond or an alkylene group having 1 to 3 carbon atoms; and $X^1$ is a reactive group selected from groups represented by a structural formula (2-1) and a structural formula (2-2) below.

EP 4 692 164 A1

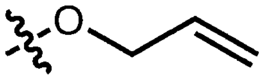

(2-1)

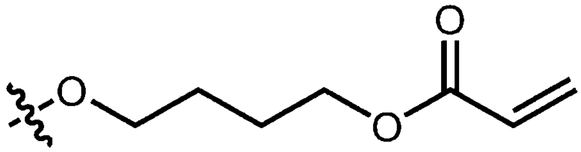

(2-2)

FIG.1

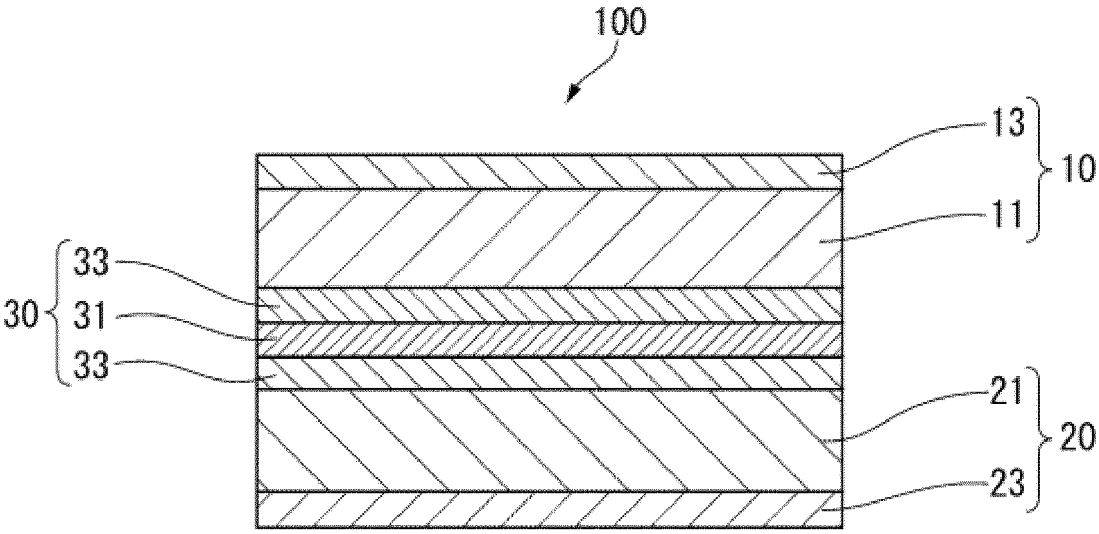

## Description

TECHNICAL FIELD

The present invention relates to a resin composition, a binder resin, a polymer thin film, and a battery.

BACKGROUND ART

Polycarbonate is used in a variety of applications, for example, as a material in the battery field. A binder resin containing polycarbonate is used, for example, as a binder for forming electrodes. A polymer thin film containing polycarbonate is used, for example, as a battery separator.

For example, Patent Literature 1 discloses a polymer binder containing a three-dimensional cross-linked aliphatic polycarbonate.

CITATION LIST

PATENT LITERATURE(S)

Patent Literature 1: International Publication No. WO 2020/203882

SUMMARY OF THE INVENTION

PROBLEM(S) TO BE SOLVED BY THE INVENTION

The polymer binder described in Patent Literature 1 is a binder for a solid electrolyte, and is not intended for use in batteries using an electrolytic solution. Therefore, when electrodes produced using this polymer binder are used in a battery using an electrolytic solution, there is a risk of elution of the polymer binder into the electrolytic solution.

An object of the invention is to provide a cross-linkable resin composition, a binder resin, a polymer thin film, and a battery.

MEANS FOR SOLVING THE PROBLEM(S)

[1] A resin composition containing a copolymer, the copolymer including a constituent unit represented by a formula (1) below and 0.3 mol% or more and 20.0 mol% or less of a constituent unit represented by a formula (2) below.

[Formula 1]

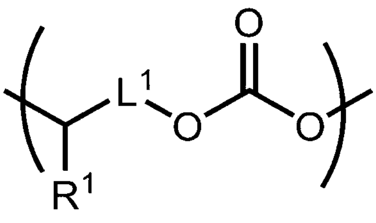

(1)

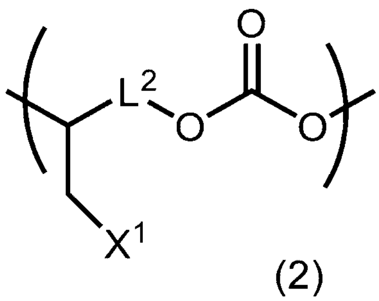

(2)

In the formulae (1) and (2):

R’ is a hydrogen atom or an alkyl group having 1 to 3 carbon atoms;
$L^1$ and $L^2$ are each independently a single bond or an alkylene group having 1 to 3 carbon atoms; and
$X^1$ is a reactive group selected from groups represented by a structural formula (2-1) and a structural formula (2-2) below.

[Formula 2]

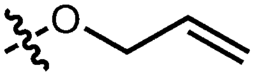

(2-1)

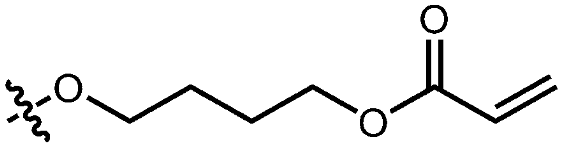

(2-2)

[2] The resin composition according to [1], in which the copolymer further includes at least one constituent unit selected from the group consisting of 0.1 mol% or more and 30.0 mol% or less of a constituent unit represented by a formula (3) below and a constituent unit represented by a formula (4) below.

[Formula 3]

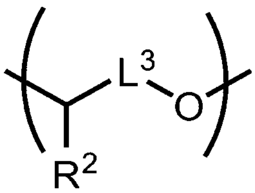

(3)

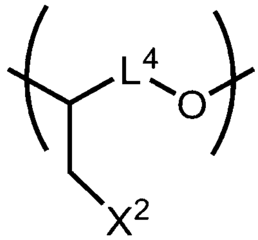

(4)

In the formulae (3) and (4):

$R^2$ is a hydrogen atom or an alkyl group having 1 to 3 carbon atoms;
$L^3$ and $L^4$ are each independently a single bond or an alkylene group having 1 to 3 carbon atoms; and
$X^2$ is a reactive group selected from groups represented by a structural formula (4-1) and a structural formula (4-2) below.

[Formula 4]

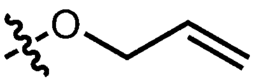

(4-1)

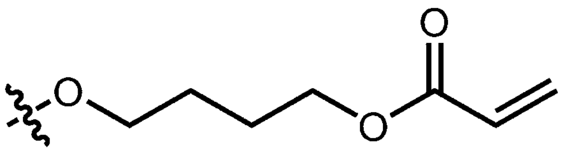

(4-2)

[3] The resin composition according to [1] or [2], in which a cross-linked product of the resin composition has an amount of elution of the copolymer to ethyl acetate of 10% or less, and a degree of swelling of the copolymer to a mixed solvent of ethylene carbonate and dimethyl carbonate in a volume ratio of 1:1 is 100% or more.
[4] A binder resin including the resin composition according to any one of [1] to [3].
[5] A battery including the binder resin according to [4].
[6] A polymer thin film including the resin composition according to any one of [1] to [3].
[7] A battery including the polymer thin film according to [6].

According to an aspect of the invention, there can be provided a crosslinkable resin composition, a binder resin, a polymer thin film, and a battery.

BRIEF DESCRIPTION OF DRAWINGS

Fig. 1 is a cross-sectional view schematically illustrating an example of a main part of a battery according to an exemplary embodiment.

Fig. 2 illustrates operation and effect in a case where a polymer thin film according to the exemplary embodiment is used as a battery separator.

Fig. 3 is a chart showing results of $^1$H-NMR measurement of a copolymer produced in Example 1.

Fig. 4 is a chart showing results of $^1$H-NMR measurement of a copolymer produced in Example 3.

DESCRIPTION OF EMBODIMENT(S)

The invention will be described below with reference to exemplary embodiment(s). The scope of the invention is not limited to the disclosure of the exemplary embodiment(s).

Resin Composition

A preferred example of a resin composition according to the exemplary embodiment will be described below.

The resin composition according to the exemplary embodiment contains a copolymer including a constituent unit represented by a formula (1) and 0.3 mol% or more and 20.0 mol% or less of a constituent unit represented by a formula (2).

The resin composition according to the exemplary embodiment having the above composition is crosslinkable. By using the resin composition according to the exemplary embodiment, a binder resin that provides excellent adhesion to metal foil and excellent binding to an inorganic material can be obtained. By using the resin composition according to the exemplary embodiment, a polymer thin film having high swelling properties to an electrolytic solution or the like can be obtained.

Consider, for example, the resin composition according to the exemplary embodiment used as a material in the field of batteries. The copolymer used in the resin composition according to the exemplary embodiment is improved in compatibility with the electrolytic solution by having a carbonate skeleton as the main polymer skeleton. Thus, after the electrolytic solution is injected in assembling a battery, the polymer thin film that serves as a separator can swell. By containing 0.3 mol% or more and 20.0 mol% or less of the constituent unit represented by the formula (2) and having a reactive group, the crosslinking reaction proceeds moderately, making it possible to achieve both a high degree of swelling and a low amount of elution.

The resin composition according to the exemplary embodiment that contains a specific copolymer having the above composition may contain any other component unless the object of the invention is not impaired.

Copolymer

The copolymer contained in the resin composition according to the exemplary embodiment includes a copolymer including a constituent unit represented by the formula (1) below and 0.3 mol% or more and 20.0 mol% or less of a constituent unit represented by the formula (2) below.

[Formula 5]

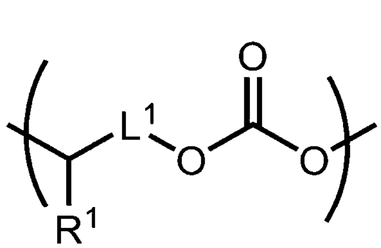

(1)

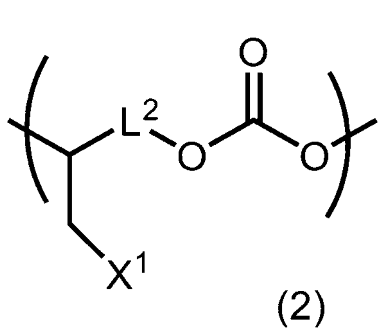

(2)

In the formulae (1) and (2):

R$^1$ is a hydrogen atom or an alkyl group having 1 to 3 carbon atoms, preferably a hydrogen atom or a methyl group, and

more preferably a methyl group.

$L^1$ and $L^2$ are each independently a single bond or an alkylene group having 1 to 3 carbon atoms, preferably a methylene group or an ethylene group, and more preferably a methylene group.

$X^1$ is a reactive group selected from groups represented by a structural formula (2-1) and a structural formula (2-2) below. Wavy lines in the structural formulae indicate bonding positions.

[Formula 6]

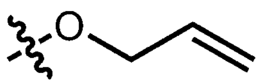

(2-1)

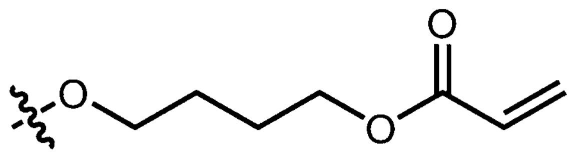

(2-2)

Such a copolymer may be a random copolymer or a block copolymer. From the viewpoint of ease of synthesis, the copolymer is preferably a random copolymer.

For example, in a case where the copolymer contained in the resin composition according to the exemplary embodiment is a copolymer including a constituent unit represented by the formula (1) and a constituent unit represented by the formula (2), a composition ratio thereof is as follows.

The ratio of the constituent unit represented by the formula (2) needs to be 0.3 mol% or more and 20 mol% or less to all the constituent units. If this ratio is less than 0.3 mol%, the amount of elution is high. If this ratio exceeds 20.0 mol%, the cross-link density of the copolymer is high, causing a problem of reduced swelling properties.

From the same viewpoint, the ratio of the constituent unit represented by the formula (2) is preferably 1.0 mol% or more, more preferably 1.5 mol% or more, and still more preferably 1.8 mol% or more. The ratio of the constituent unit represented by the formula (2) is preferably 19.0 mol% or less, more preferably 18.0 mol% or less, still more preferably 12.0 mol% or less, and still further more preferably 6.0 mol% or less.

The ratio of the constituent unit represented by the formula (1) needs to be 80.0 mol% or more and 99.7 mol% or less to all the constituent units. The ratio of the constituent unit represented by the formula (1) is preferably 81.0 mol% or more, more preferably 82.0 mol% or more, still more preferably 88.0 mol% or more, and still further more preferably 94.0 mol% or more. The ratio of the constituent unit represented by the formula (1) is preferably 99.0 mol% or less, more preferably 98.5 mol% or less, and still more preferably 98.2 mol% or less.

Preferably, the copolymer contained in the resin composition according to the exemplary embodiment further includes at least one constituent unit selected from the group consisting of 0.1 mol% or more and 30.0 mol% or less of a constituent unit represented by a formula (3) below and a constituent unit represented by a formula (4) below.

The copolymer having an ether skeleton such as a constituent unit represented by the formula (3) or (4) lowers the glass transition temperature of the copolymer to make the thin film flexible, which is expected to result in high ionic conductivity.

[Formula 7]

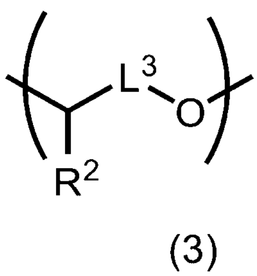

(3)

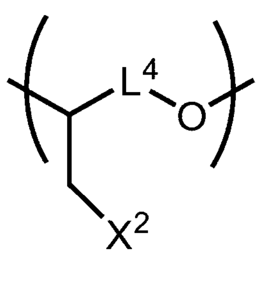

(4)

In the formulae (3) and (4):

$R^2$ is a hydrogen atom or an alkyl group having 1 to 3 carbon atoms, preferably a hydrogen atom or a methyl group, and more preferably a methyl group.

$L^3$ and $L^4$ are each independently a single bond or an alkylene group having 1 to 3 carbon atoms, preferably a

methylene group or an ethylene group, and more preferably a methylene group.

$X^2$ is a reactive group selected from groups represented by a structural formula (4-1) and a structural formula (4-2) below. Wavy lines in the structural formulae indicate bonding positions.

[Formula 8]

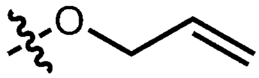

(4-1)

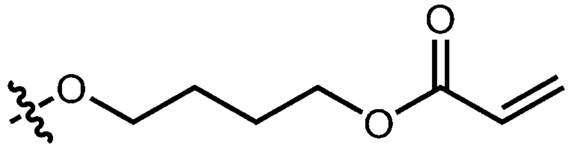

(4-2)

For example, in a case where the copolymer contained in the resin composition according to the exemplary embodiment is a copolymer including a constituent unit represented by the formula (1), a constituent unit represented by the formula (2), a constituent unit represented by the formula (3), and a constituent unit represented by the formula (4), a composition ratio thereof is as follows.

The ratio of the constituent unit represented by the formula (2) is as described above.

The ratio of the total of the constituent unit represented by the formula (3) and the constituent unit represented by the formula (4) is preferably 0.1 mol% or more and 30.0 mol% or less to all the constituent units. If the ratio of the total of these constituent units is less than 0.1 mol%, the operation and effect provided by the ether skeleton tends not to be fully exerted. If the ratio of the total of these constituent units exceeds 30.0 mol%, the compatibility with the electrolytic solution is poor, the degree of swelling decreases, and the ionic conductivity tends to decrease.

From the same viewpoint, the ratio of the total of these constituent units is preferably 1.0 mol% or more, more preferably 2.0 mol% or more. The ratio of the total of these constituent units is preferably 25.0 mol% or less, more preferably 20.0 mol% or less, and still more preferably 10.0 mol% or less.

The ratio of the constituent unit represented by the formula (1) is preferably 50.0 mol% or more and 99.6 mol% or less to all the constituent units. The ratio of the constituent unit represented by the formula (1) is preferably 55.0 mol% or more, more preferably 60.0 mol% or more. The ratio of the constituent unit represented by the formula (1) is preferably 98.0 mol% or less, more preferably 94.0 mol% or less.

If the molecular weight of the copolymer according to the exemplary embodiment measured by a method described in measurement examples below is expressed as a weight average molecular weight (Mw), the weight average molecular weight (Mw) is preferably 5,000 or more and 5,000,000 or less, more preferably 10,000 or more and 1,000,000 or less.

If the molecular weight of the copolymer according to the exemplary embodiment measured by a method described in the measurement examples below is expressed as a number average molecular weight (Mn), the number average molecular weight (Mn) is preferably 3,000 or more and 3,000,000 or less, more preferably 5,000 or more and 500,000 or less.

The ratio of the weight average molecular weight (Mw) to the number average molecular weight (Mw/Mn) is preferably 1 or more and 10 or less, more preferably 1.1 or more and 5 or less. Setting the molecular weight and molecular weight distribution of the copolymer within the above ranges provides sufficient handleability when the copolymer is formed into a film. In addition, setting the molecular weight and molecular weight distribution of the copolymer within the above ranges in a case where the copolymer is used as a binder makes the viscosity of slurry during the preparation of electrode slurry appropriate. This inhibits the sedimentation of an active material(s) and a conductive assistant(s), and obtains sufficient dispersibility of the active material(s) and conductive assistant(s).

Method of Producing Copolymer

A method for producing the copolymer contained in the resin composition according to the exemplary embodiment is not particularly limited, and the copolymer can be obtained by a known method. For example, the copolymer can be produced by the following method.

As described in Examples below, the copolymer can be produced by copolymerizing an epoxide monomer such as propylene oxide with carbon dioxide in the presence of a polymerization catalyst. Specifically, propylene oxide undergoes ring-opening to become a constituent unit represented by the formula (3), and a part of the propylene oxide polymerizes with carbon dioxide during the ring-opening to become a constituent unit represented by the formula (1).

The polymerization catalyst used in producing the copolymer is not particularly limited, and examples thereof

include metal salen complex catalysts such as cobalt salen catalysts, and organozinc catalysts.

For example, in a case of the metal salen complex catalyst, the amount of the polymerization catalyst used in the copolymerization reaction of the epoxide monomer with carbon dioxide is preferably 0.05 mol or less, more preferably 0.01 mol or less, and still more preferably 0.001 mol or less, per 1 mol of the epoxide monomer.

In a case of using the metal salen complex catalyst, a promoter can be used. As the promoter, for example, an onium salt compound is preferred. Specific examples of the onium salt compound are not particularly limited, but from the viewpoint of high reaction activity, bis(triphenylphosphoranylidene)ammonium chloride, piperidine, bis(triphenylphosphoranylidene)ammonium fluoride, ammonium pentafluorobenzoate, and tetra-n-butylammonium chloride are preferred.

The optimum polymerization conditions vary depending on the type of catalyst, but for example, the carbon dioxide pressure in a reaction container is 0.1 MPa or more and 10 MPa or less, preferably 0.5 MPa or more and 5 MPa or less.

For example, in a case of a cobalt salen complex catalyst, the polymerization temperature is preferably about room temperature (25 degrees C) from the viewpoint of good catalytic action and accelerated reaction rate.

In a method of copolymerizing an epoxide monomer with carbon dioxide, examples of the epoxide monomer used as a starting material include ethylene oxide, propylene oxide, 1,2-butylene oxide, allyl glycidyl ether, and 4-hydroxybutyl acrylate glycidyl ether. The molar ratio of the constituent unit represented by the formula (1) and the constituent unit represented by the formula (2) in the copolymer may not be the same as the molar mixture ratio of the epoxide monomer serving as the starting material for the constituent unit represented by the formula (1) and the epoxide monomer serving as the starting material for the constituent unit represented by the formula (2) due to differences in reactivity.

Properties of Cross-Linked Product of Resin Composition

In a cross-linked product of the resin composition according to the exemplary embodiment, the amount of elution of the copolymer to ethyl acetate is preferably 40% or less, more preferably 30% or less, still more preferably 20% or less, still further more preferably 10% or less, and yet still further more preferably 7% or less. Since the low molecular components of the eluted copolymer become an irreversible capacity, the amount of elution is preferably as small as possible. The lower limit of the amount of elution of the copolymer is not particularly limited, and may be, for example, 1% or more, 0.1% or more, or 0%.

In the cross-linked product of the resin composition according to the exemplary embodiment, it is preferable that the amount of elution of the copolymer to ethyl acetate is within the above ranges, and the degree of swelling of the copolymer to a mixed solvent of ethylene carbonate and dimethyl carbonate in a volume ratio of 1:1 is 100% or more.

The cross-linked product of the resin composition according to the exemplary embodiment preferably has high swelling properties to an electrolytic solution and a carbonate-based solvent or the like used as a solvent for the electrolytic solution. From such a viewpoint, the degree of swelling of the copolymer to the above mixed solvent of ethylene carbonate and dimethyl carbonate in a volume ratio of 1:1 is preferably 100% or more, more preferably 200% or more, still more preferably 300% or more, still further more preferably 500% or more, yet still further more preferably 700% or more, and most preferably 900% or more. The upper limit of the degree of swelling is not particularly limited, and may be, for example, 2000% or less.

Method for Crosslinking Resin Composition

From the viewpoint of facilitating the production of a polymer thin film in which the copolymer is crosslinked, a photopolymerization initiator is preferably used for the resin composition according to the exemplary embodiment. In a case where the photopolymerization initiator is used for the resin composition according to the exemplary embodiment, a thin film containing the copolymer undergoes crosslinking due to a reaction of reactive groups (an allyl group and (meth) acryloyl group) in side chains of the copolymer in the thin film.

The photopolymerization initiator is not particularly limited, and exemplified by known compounds. The photopolymerization initiator is preferably an ultravioletsensitive photopolymerization initiator. One type of photopolymerization initiator may be used alone, or two or more types of photopolymerization initiators may be used in combination.

Specific examples of the photopolymerization initiator include: α-ketol compounds such as 4-(2-hydroxyethoxy) phenyl(2-hydroxy-2-propyl)ketone, α-hydroxy-α,α'-dimethylacetophenone, 2-methyl-2-hydroxy propiophenone, and 1-hydroxycyclohexylphenylketone; acetophenone compounds such as methoxyacetophenone, 2,2-dimethoxy-2-phenylacetophenone, 2,2-diethoxyacetophenone, and 2-methyl-1-[4-(methylthio)-phenyl]-2-morpholinopropane-1; benzoinether compounds such as benzoinethylether, benzoinisopropylether, and anisoinmethylether; ketal compounds such as benzyldimethylketal; aromatic sulfonylchloride compounds such as 2-naphthalenesulfonylchloride; photoactive oxime compounds such as 1-phenone-1, and 1-propanedione-2-(o-ethoxycarbonyl)oxime; benzophenone such as benzoyl

benzoate, 3,3'-dimethyl-4-methoxybenzophenone; thioxanthone compounds such as thioxanthone, 2-chlorothioxanthone, and 2-methylthioxanthone; benzophenone compounds such as camphorquinone; halogenated ketone; acylphosphinoxide; acylphosphonate; and oligo[2-hydroxy-2-methyl-1-(4-(1-methylvinyl)phenyl)propanone].

The content of the photopolymerization initiator is, for example, preferably 0.1 parts by mass or more and 10 parts by mass or less, more preferably 0.5 parts by mass or more and 7.5 parts by mass or less, and still more preferably 1 part by mass or more and 5 parts by mass or less, with respect to 100 parts by mass of the copolymer.

The resin composition according to the exemplary embodiment is molded into a predetermined shape, and the molded product is irradiated with energy rays, whereby the copolymer is crosslinked, and a thin film that is a cross-linked product of the copolymer is obtained. The type of energy ray is not particularly limited, but ultraviolet rays are preferred from the viewpoint of reactivity and workability. The device for irradiating the molded product with ultraviolet rays is not particularly limited, and may be, for example, a device provided with an ultraviolet LED lamp, a device provided with a high-pressure mercury lamp, or a device provided with a metal halide lamp.

The conditions under which the molded product is irradiated with ultraviolet rays are not particularly limited. The maximum illuminance and cumulative light intensity for ultraviolet irradiation are exemplified as follows. The maximum illuminance is preferably 5 $mW/cm^2$ or more and 1,000 $mW/cm^2$ or less. The cumulative light intensity is preferably 50 $mJ/cm^2$ or more and 5,000 $mJ/cm^2$ or less.

Binder Resin

The binder resin according to the exemplary embodiment includes a resin composition according to the exemplary embodiment. When used as a material for a mixture layer in an electrode of a secondary battery, the binder resin according to the exemplary embodiment has excellent swelling properties to an electrolytic solution, excellent adhesion to metal foil, and excellent binding properties to inorganic materials. The reason thereof is not clear, but is thought to be as follows.

Conventional binder resins used in a mixture layer of a secondary battery such as a lithium ion battery have been designed to have low swelling properties to an electrolytic solution, so that even if the binder resin swells with the electrolytic solution, it is possible to obtain adhesion between the mixture layer and the current collector and binding between the active materials in the mixture layer.

It is believed that the mixture layer in contact with the electrolytic solution has a contact area between the binder resin and the active material, and a contact area between the active material and the electrolytic solution, due to the electrolytic solution permeating into the mixture layer. Conventional binder resins have low swelling properties to the electrolytic solution, making it difficult for the conventional binder resins to exhibit ionic conductivity, and the contact area between the binder resin and the active material has low ionic conductivity for lithium ions and the like contained in the electrolytic solution. On the contrary, in the contact area between the active material and the electrolytic solution, the ionic conductivity for lithium ions and the like contained in the electrolytic solution is improved. In addition, since conventional binder resins have low swelling properties to the electrolytic solution, the contact area between the binder resin and the active material does not greatly increase in size. While the dimension of the contact area between the binder resin and the active material is small, the dimension of the contact area between the active material and electrolytic solution is large.

It is believed that the electrolytic solution is not likely to decompose in the contact area between the binder resin and the active material, but a decomposition layer of the electrolytic solution called a solid electrolyte interphase (SEI) layer is likely to form in the contact area between the active material and the electrolytic solution. When a conventional binder resin is used in the mixture layer, the dimension of the contact area between the active material and the electrolytic solution is large as described above. Thus, the dimension of the area where the SEI layer is formed is also large, which tends to shorten the lifetime of the electrolytic solution.

On the other hand, in a case of using the binder resin according to the exemplary embodiment in a mixture layer of a secondary battery such as a lithium ion battery, the binder resin according to the exemplary embodiment is improved in compatibility with the electrolytic solution by including a copolymer that has a carbonate skeleton as the main polymer skeleton, thus having high swelling properties to the electrolytic solution. The binder resin according to the exemplary embodiment significantly swells in contact with the electrolytic solution, thereby exhibiting ionic conductivity. In addition, since the binder resin according to the exemplary embodiment has high swelling properties to the electrolytic solution, the dimension of the contact area between the binder resin and the active material is large, whereas the dimension of the contact area between the active material and the electrolytic solution is small. For this reason, in a case of using the binder resin according to exemplary embodiment, it is considered that ionic conductivity is exhibited and the electrolytic solution is not likely to decompose in the contact area between the binder resin and the active material, and the area in which the SEI layer is formed is reduced in the contact area between the active material and the electrolytic solution. As a result, when the binder resin according to the exemplary embodiment is used in a mixture layer of a secondary battery such as a lithium ion battery, it is believed to contribute to improving the lifetime of the electrolytic solution, thus leading to improved battery performance. However, if the swelling properties to the electrolytic solution are too high, the adhesion properties to metal

foil and the binding properties to inorganic materials tend to decrease.

The binder resin according to the exemplary embodiment provides excellent adhesion to metal foil and excellent binding to inorganic materials, and it can be used in applications where such properties are required. The binder resin according to the exemplary embodiment is preferably used for batteries, for example. In this case, for example, the binder resin according to the exemplary embodiment is preferably a binder resin for a battery electrode, and also preferably a binder resin for an electrode of a secondary battery such as a lithium ion battery. The binder resin according to the exemplary embodiment may be applied as a binder resin used in a mixture layer in a positive electrode, or may be applied as a binder resin used in a mixture layer in a negative electrode.

## Polymer Thin Film

The polymer thin film according to the exemplary embodiment includes a resin composition according to the exemplary embodiment. The polymer thin film according to the exemplary embodiment has high swelling properties to an electrolytic solution or the like. The reason thereof is not clear, but is thought to be as follows. A copolymer used in the polymer thin film according to the exemplary embodiment is improved in compatibility with the electrolytic solution by having a carbonate skeleton as the main polymer skeleton. Thus, after the electrolytic solution is injected in assembling a battery, the polymer thin film that serves as a separator can swell. By containing a predetermined amount of a constituent unit represented by the formula (2) and having a reactive group, the crosslinking reaction proceeds appropriately, making it possible to achieve both a high degree of swelling and a low amount of elution.

The polymer thin film according to the exemplary embodiment that has high swelling properties to an electrolytic solution or the like can be used in applications where such properties are required. The polymer thin film according to the exemplary embodiment is preferably used for batteries, for example. In this case, for example, the polymer thin film according to the exemplary embodiment is preferably a battery separator, and also preferably a battery separator for a secondary battery such as a lithium ion battery. In addition, for example, the polymer thin film according to the exemplary embodiment is preferably a negative-electrode protective film that covers at least a part of the negative electrode of a battery, and also preferably a negative-electrode protective film of a secondary battery such as a lithium ion battery.

## Battery

Subsequently, a preferred example of a battery according to the exemplary embodiment will be described.

The battery according to the exemplary embodiment includes a battery to which a resin composition according to the exemplary embodiment is applied. The battery according to the exemplary embodiment includes a binder resin according to the exemplary embodiment as a material constituting electrodes of the battery. In addition, the battery according to the exemplary embodiment includes, for example, a polymer thin film according to the exemplary embodiment as a battery separator. The battery includes a positive electrode, a negative electrode, and an electrolyte layer disposed between the positive electrode and the negative electrode. Such an arrangement results in a battery excellent in a variety of properties. The battery is preferably a secondary battery, more preferably a secondary battery such as a lithium ion battery. The structure of the battery according to the exemplary embodiment is not particularly limited, and may be a stacked type structure or a wound type structure.

Referring to the drawings, an exemplary battery using a polymer thin film according to the exemplary embodiment will be described. In the drawings, some parts are enlarged or reduced in size for ease of description.

Fig. 1 illustrates an exemplary battery in which a polymer thin film according to the exemplary embodiment is used. A battery 100 illustrated in Fig. 1 is a lithiumion secondary battery. As illustrated in Fig. 1, the battery 100 includes a positive electrode 10, a negative electrode 20, and an electrolyte layer 30 between the positive electrode 10 and the negative electrode 20. The positive electrode 10 includes a positive electrode current collector 13 and a positive electrode mixture layer 11 layered on the positive electrode current collector 13, and the negative electrode 20 includes a negative electrode current collector 23 and a negative electrode mixture layer 21 layered on the negative electrode current collector 23. The electrolyte layer 30 includes an electrolytic solution 33 and a separator 31 impregnated with the electrolytic solution 33, and the separator 31 separates the positive electrode 10 from the negative electrode 20. The battery 100 has a layered structure in which the positive electrode current collector 13, the positive electrode mixture layer 11, the electrolyte layer 30, the negative electrode mixture layer 21, and the negative electrode current collector 23 are layered in this order from the positive electrode current collector 13 toward the negative electrode current collector 23, and the layered structure is contained inside a container not illustrated.

In the battery 100, the positive electrode mixture layer 11 and the negative electrode mixture layer 21 preferably contain a binder resin according to the exemplary embodiment (not illustrated). In this case, the positive electrode mixture layer 11 and the negative electrode mixture layer 21 contain the electrolytic solution 33 due to the electrolytic solution 33 of the electrolyte layer 30 penetrating therein, and the binder resin according to the exemplary embodiment (not illustrated) is swelled by the electrolytic solution 33.

In the battery 100, the polymer thin film according to the exemplary embodiment is preferably used as the separator 31.

In the battery 100, the polymer thin film according to the exemplary embodiment is preferably used as a negative electrode protective film (not illustrated) that covers at least a part of the negative electrode mixture layer 21.

The battery using the polymer thin film according to the exemplary embodiment can inhibit generation of dendrites by having the above arrangement. The reason thereof is not clear, but is thought to be as follows. Consider the polymer thin film according to the exemplary embodiment used as the separator 31. The separator 31 and the electrolytic solution 33 are in separation as illustrated in Fig. 2(A), after the electrolytic solution is injected in assembling the battery. In this state, there is a gap between the negative electrode mixture layer 21 and the separator 31 due to fine unevenness. The inventors presume that dendrites precipitate in this area. However, the separator 31 using the polymer thin film according to the exemplary embodiment has high swelling properties to the electrolytic solution 33, and thus the separator 31 swells after a certain period of time has passed since the electrolytic solution was injected, as illustrated in Fig. 2(B). Such swelling of the separator 31 eliminates the gap between the negative electrode mixture layer 21 and the separator 31, as illustrated in Fig. 2(C). Accordingly, in a case where the polymer thin film according to the exemplary embodiment is used as the separator 31, it is possible to inhibit generation of dendrites.

An exemplary battery according to the exemplary embodiment has been described above with reference to Figs. 1 and 2. The exemplary battery according to the exemplary embodiment, however, is not limited thereto. The battery according to the exemplary embodiment may have a variety of forms as long as a polymer thin film according to the exemplary embodiment is used.

Exemplary materials usable for the positive electrode current collector and the negative electrode current collector include a metal plate or metal foil such as copper, aluminum, nickel, titanium, and stainless steel, a carbon sheet, and a carbon nanotube sheet.

For example, the positive electrode mixture layer is preferably formed from a positive electrode active material such as a lithium-containing composite oxide, a conductive assistant such as a carbon-based material, a binder resin according to the exemplary embodiment, and the like.

For example, the negative electrode mixture layer is preferably formed from a negative electrode active material such as acetylene black, carbon nanotube, carbon nanofiber, and graphene, a binder resin according to the exemplary embodiment, and the like.

For example, the electrolyte layer is preferably formed from an electrolytic solution and a separator which is a polymer thin film according to the exemplary embodiment.

In the battery according to the exemplary embodiment, the electrolytic solution preferably contains a lithium salt and a carbonate-based solvent. From the viewpoint of easily improving the effect of inhibiting the generation of dendrites, the molar ratio of the lithium salt to the carbonate-based solvent (lithium salt/carbonate-based solvent) is preferably 1/6 or more and 1/1 or less. This molar ratio is more preferably 1/4 or more and 1/1 or less, and still more preferably 1/3 or more and 1/1 or less.

Specific examples of the lithium salt include lithium hexafluorophosphate, lithium bis(trifluoromethanesulfonyl) imide, lithium-bis(fluorosulfonyl)imide, lithium 2-trifluoromethyl-4,5-dicyanoimidazolate, lithium 4,5-dicyano-1,2,3-triazolate, lithiumbis(pentafluoroethylsulfonyl)imide, lithium borofluoride, lithium-bis(oxalato)borate, lithium nitrate, lithium chloride, lithium bromide, and lithium fluoride. As the lithium salt, it is possible to use one or more of the lithium salts listed above.

Specific examples of the carbonate-based solvent include dimethyl carbonate, diethyl carbonate, ethylmethyl carbonate, dipropyl carbonate, methylpropyl carbonate, ethylpropyl carbonate, ethylene carbonate, propylene carbonate, and butylene carbonate. As the carbonate-based solvent, it is possible to use one or more of the lithium salts listed above. Here, the carbonate-based solvent in the exemplary embodiment refers to a compound having a carbonate skeleton in its molecular structure.

It should be noted that the invention is not limited to the above exemplary embodiment, and modifications, improvements, etc. are within the scope of the invention as long as the object of the invention is achievable.

## Examples

The invention will be described below in further detail with reference to Examples, but the invention is not limited to the Examples.

The measurement or evaluation in Examples and Comparatives below was performed by methods below.

### Measurement of Weight Average Molecular Weight (Mw) and Number Average Molecular Weight (Mn)

Measurements were performed under the following conditions using a gel permeation chromatography system (produced by Tosoh Corporation, product name "HLC-8320GPC"), and values measured by standard polystyrene

conversion were used.

Measurement Conditions

- Column: "TSKgel guardcolumn SuperH-H", "TSKgel SuperHM-H", "TSKgel SuperHM-H", and "TSKgel SuperH2000" (all produced by Tosoh Corporation) connected sequentially; column temperature: 40 degrees C; developing solvent: tetrahydrofuran (copolymer concentration 1 mass%)
- Standard substance: polystyrene, injection volume: 20 μL
- Flow rate: 0.60 mL/min
- Detector: differential refractometer

Measurement of Amount of Elution

Thin films obtained in Examples and Comparatives described below were each weighed to be about 300 mg. The mass of the thin film at this time is defined as $M_0$. This thin film was wrapped in a polyester mesh (mesh size 200). The mass of the thin film wrapped in the polyester mesh was weighed, and the mass of the thin film was subtracted to calculate the mass of the polyester mesh alone. Next, the thin film wrapped in the polyester mesh was immersed in ethyl acetate at 23 degrees C for 48 hours. Thereafter, the thin film wrapped in the polyester mesh was removed from the ethyl acetate and dried in an oven at 120 degrees C for 2 hours, and then airdried in an environment at a temperature of 23 degrees C and a relative humidity of 50% for 2 hours. The mass after air drying was weighed, and the mass of the polyester mesh alone was subtracted therefrom to calculate the mass of the thin film alone after immersion. The mass at this time is defined as $M_1$. The amount of elution was calculated according to the following numerical formula (F1).

$$\text{Amount of Elution (\%)} = \{(M_0 - M_1)/M_0\} \times 100...(F1)$$

In the numerical formula (F1), $M_0$ represents a mass of the thin film weighed before being wrapped in the polyester mesh, and $M_1$ represents a mass of the thin film alone after being immersed in ethyl acetate.

Measurement of Degree of Swelling

Thin films obtained in Examples and Comparatives described below were each cut into a piece of about 3 cm (length) x about 3 cm (width), and the obtained thin film piece was weighed to be about 1 g. The mass at this time is defined as $W_0$. This thin film piece was wrapped in a polyester mesh (mesh size 200), and the mass of the thin film piece wrapped in the polyester mesh was weighed, and the mass of the thin film piece was subtracted to calculate the mass of the polyester mesh alone. The thin film piece wrapped in the polyester mesh was immersed in a carbonate-based solvent (a mixture of ethylene carbonate and dimethyl carbonate, composition: ethylene carbonate/dimethyl carbonate = 1/1 (volume ratio)) for 24 hours to swell. The thin film piece wrapped in the polyester mesh was then pulled out, the solvent on the surface was wiped off with a paper wiper, and the mass was measured. The mass of the thin film piece after swelling was calculated by subtracting the mass of the polyester mesh alone. The mass at this time is defined as $W_1$. The degree of swelling was calculated according to the following numerical formula (F2).

$$\text{Degree of Swelling (\%)} = \{(W_1 - W_0)/W_0\} \times 100...(F2)$$

In the numerical formula (F2), $W_0$ represents a mass of the thin film piece weighed before being wrapped in the polyester mesh, and $W_1$ represents a mass of the thin film piece alone after swelling.

Measurement of Ion Conductivity

Measurement was performed on lithium half-cells obtained in Examples and Comparatives described below using an alternating-current impedance method in which an alternating current (an application voltage of 10 mV) was applied to between the electrodes to measure the resistance component. The ion conductivity was calculated from the real impedance intercept of the thus-obtained Cole-Cole plot. The measurement was performed using a potentiostat/galvanostat (VMP-300, produced by BioLogic).

The ion conductivity ($\sigma_A$) was calculated according to the following numerical formula (F3) below.

$$\sigma_A = L_A/(R_A \times S_A)...(F3)$$

In the numerical formula (F3), $\sigma_A$ represents an ion conductivity (unit: $S\cdot cm^{-1}$), $R_A$ represents a resistance (unit: $\Omega$), $S_A$ represents a cross-sectional area of a solid electrolyte membrane at the time of the measurement (unit: $cm^2$), and $L_A$ represents a distance between the electrodes (unit: cm).

The measurement temperature is 25 degrees C. The ion conductivity ($\sigma_A$) was calculated from a complex impedance measurement result.

Example 1

Synthesis of Polymerization Catalyst

(R,R)-N,N'-bis(3,5-di-tert-butylsalicylidene)-1,2-diaminocyclohexanecobalt(II) and pentafluorobenzoic acid were weighed out in a molar ratio of 1:1.1 and put in a flask, to which was added dehydrated toluene. The flask was shielded from light with aluminum foil and the reaction was carried out at room temperature for 20 hours. The chemical reaction formula is as follows. After the reaction was completed, the solvent was removed under reduced pressure, and washed several times with an excess amount of hexane. Thereafter, the product was vacuum dried at room temperature to obtain a cobalt salen complex.

[Formula 9]

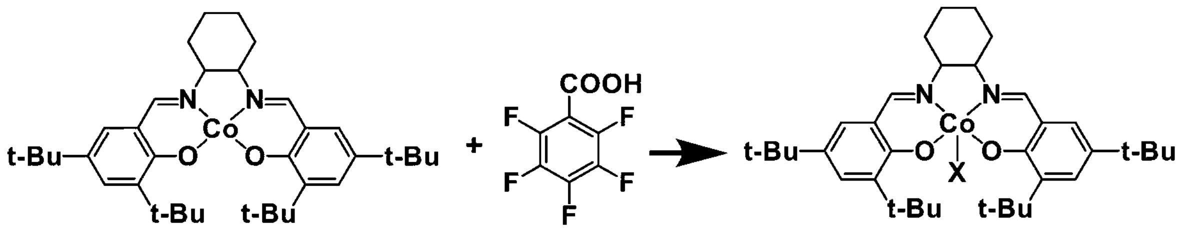

X=OCOBzF$_5$

Synthesis of Copolymer A

As the epoxide monomer, a mixture of propylene oxide and allyl glycidyl ether in a molar ratio of 97:3 was used. As the polymerization catalyst, the cobalt salen complex synthesized was used. As the promoter, bis(triphenylphosphoranylidene)ammonium chloride was used. The epoxide monomer, the polymerization catalyst, and the promoter were weighed out in a molar ratio of 2000:1:1, and put in a pressure-resistant container. Further, 200 ppm of phenothiazine was added, and then ethyl acetate was added so that the ratio between monomer and ethyl acetate was 50:50 (mass ratio). The atmosphere in the pressure container was replaced with argon, and all of the above operations were carried out. Subsequently, after purging the inside of the pressure container, carbon dioxide was introduced into the pressure container by a liquid delivery pump to set the pressure inside the pressure container to 2.0 MPa, and a polymerization reaction was carried out at 25 degrees C for 20 hours.

After the reaction was completed, chloroform was added to the contents of the pressure container to prepare a chloroform solution, and 1M hydrochloric acid was added. The chloroform solution was then added dropwise into stirring methanol to precipitate the product. Thereafter, the product was dried under reduced pressure in a desiccator using a diaphragm pump, and then vacuum dried at 60 degrees C to obtain a copolymer A.

The structure of the obtained copolymer A was confirmed by nuclear magnetic resonance spectroscopy ($^1$H-NMR, Biospin Avance 500, produced by Bruker) using $CDCl_3$ containing 0.03 vol% tetramethylsilane as a solvent. The molar ratio of the constituent unit represented by the formula (1) (hereinafter also referred to as a constituent unit (1)), the constituent unit represented by the formula (2) (hereinafter also referred to as a constituent unit (2)), the constituent unit represented by the formula (3) (hereinafter also referred to as a constituent unit (3)), and the constituent unit represented by the formula (4) (hereinafter also referred to as a constituent unit (4)) in the copolymer A was constituent unit (1):constituent unit (2):constituent unit (3):constituent unit (4) = 94.5:2.9:2.5:0.1 (see Fig. 3).

The number average molecular weight Mn of the resulting copolymer A was 24,000, and the molecular weight distribution Mw/Mn was 1.1.

Preparation of Thin Film

To the obtained copolymer A, 1-hydroxycyclohexyl phenyl ketone was added as a photopolymerization initiator so that the copolymer:initiator was 97:3 mass%, and the mixture was further diluted with ethyl acetate and stirred to prepare a solution for thin film formation with a solid content concentration of 30 mass%. A first release film (produced by LINTEC Corporation, product name "SP-PET381031") was prepared, and a release treatment surface of this release film was coated with the prepared thin film forming solution, and dried at 120 degrees C for 1 minute to form a thin film layer with a thickness of 10 μm. Further, a second release film (produced by LINTEC Corporation, product name "SP-PET382150") was prepared, and a release treatment surface of this release film was attached to a surface of the thin film layer. A laminate of the thin film sandwiched between the first release film and the second release film was then placed on a stainless steel plate and irradiated with ultraviolet light while being heated at a temperature of 50 degrees C [illuminance: 200 $mW/cm^2$, accumulated light intensity: 1000 $mJ/cm^2$, measured using an illuminance/light-intensity meter produced by EYE GRAPHICS COMPANY (control unit: EYE UV METER UVPF-A2, light receiving unit: EYE UV METER PD-365A2)] to obtain a thin film having a thickness of 10 μm. The resulting thin film is a negative electrode protective film. The resulting thin film was measured in terms of the amount of elution and the degree of swelling by the above-mentioned methods.

Example 2

Polymerization of Copolymer B

Polymerization was carried out as in Example 1, except that a mixture of propylene oxide and allyl glycidyl ether in a molar ratio of 90:10 was used as the epoxide monomer. The structure of the obtained copolymer B was confirmed by $^1H$-NMR as in Example 1. The molar ratio of the constituent unit (1), the constituent unit (2), the constituent unit (3), and the constituent unit (4) in the copolymer B was constituent unit (1):constituent unit (2):constituent unit (3):constituent unit (4) = 81.7:8.4:8.9:0.9.

The number average molecular weight Mn of the resulting copolymer B was 25,000, and the molecular weight distribution Mw/Mn was 1.2.

Preparation of Thin Film

A thin film having a thickness of 10 μm was obtained as in Example 1, except that the copolymer B was used.

Example 3

Polymerization of Copolymer C

Polymerization was carried out as in Example 1, except that a mixture of propylene oxide and 4-hydroxybutyl acrylate glycidyl ether in a molar ratio of 98:2 was used as the epoxide monomer. The structure of the obtained copolymer C was confirmed by $^1H$-NMR as in Example 1. The molar ratio of the constituent unit (1), the constituent unit (2), the constituent unit (3), and the constituent unit (4) in the copolymer C was constituent unit (1):constituent unit (2):constituent unit (3):constituent unit (4) = 95.0:2.1:2.8:0.1 (see Fig. 4).

The number average molecular weight Mn of the resulting copolymer C was 38,000, and the molecular weight distribution Mw/Mn was 1.2.

Preparation of Thin Film

A thin film having a thickness of 10 μm was obtained as in Example 1, except that the copolymer C was used.

Example 4

Polymerization of Copolymer D

Polymerization was carried out as in Example 1, except that a mixture of propylene oxide and 4-hydroxybutyl acrylate glycidyl ether in a molar ratio of 95:5 was used as the epoxide monomer. The structure of the obtained copolymer D was confirmed by $^1H$-NMR as in Example 1. The molar ratio of the constituent unit (1), the constituent unit (2), the constituent unit (3), and the constituent unit (4) in the copolymer D was constituent unit (1):constituent unit (2):constituent unit (3):constituent unit (4) = 92.3:5.1:2.5:0.1.

The number average molecular weight Mn of the resulting copolymer D was 41,000, and the molecular weight

distribution Mw/Mn was 1.1.

Preparation of Thin Film

A thin film having a thickness of 10 μm was obtained as in Example 1, except that the copolymer D was used.

Comparative 1

Preparation of Thin Film

Polyethylene carbonate (product name "QPAC25", produced by EMPOWER MATERIALS) was diluted with chloroform to prepare a solution with a solid content concentration of 30 mass%. A release treatment surface of a release film (produced by LINTEC Corporation, product name "SP-PET381031") was coated with the prepared solution, and dried at 90 degrees C for 1 minute to obtain a thin film with a thickness of 10 μm.

Comparative 2

Preparation of Thin Film

Polypropylene carbonate (product name "QPAC40", produced by EMPOWER MATERIALS) was diluted with ethyl acetate to prepare a solution with a solid content concentration of 30 mass%. A release treatment surface of a release film (produced by LINTEC Corporation, product name "SP-PET381031") was coated with the prepared solution, and dried at 120 degrees C for 1 minute to obtain a thin film with a thickness of 10 μm.

Table 1

| | Polymer | Constituent unit (1) | | | Constituent unit (2) | | | Constituent unit (3) | | | Constituent unit (4) | | |
|---|---|---|---|---|---|---|---|---|---|---|---|---|---|
| | | $R^1$ | $L^1$ | Introduction ratio | $L^2$ | $X^1$ | Introduction ratio | $R^2$ | $L^3$ | Introduction ratio | $L^4$ | $X^2$ | Introduction ratio |
| | | Structure | Structure | (mol%) | Structure | Structure | (mol%) | Structure | Structure | (mol%) | Structure | Structure | (mol%) |
| Ex. 1 | Copolymer A | Methyl | Methylene | 94.5 | Methylene | Formula (2-1) | 2.9 | Methyl | Methylene | 2.5 | Methylene | Formula (4-1) | 0.1 |
| Ex. 2 | Copolymer B | Methyl | Methylene | 81.7 | Methylene | Formula (2-1) | 8.4 | Methyl | Methylene | 8.9 | Methylene | Formula (4-1) | 0.9 |
| Ex. 3 | Copolymer C | Methyl | Methylene | 95.0 | Methylene | Formula (2-2) | 2.1 | Methyl | Methylene | 2.8 | Methylene | Formula (4-2) | 0.1 |
| Ex. 4 | Copolymer D | Methyl | Methylene | 92.3 | Methylene | Formula (2-2) | 5.1 | Methyl | Methylene | 2.5 | Methylene | Formula (4-2) | 0.1 |
| Comp. 1 | QPAC25 | Hydrogen | Methylene | 100.0 | Methylene | None | | - | - | 0 | - | | 0 |
| Comp. 2 | QPAC40 | Methyl | Methylene | 100.0 | Methylene | None | | - | - | 0 | - | - | 0 |

Table 2

| | Physical properties of thin film | |
|---|---|---|
| | Elution amount | Degree of swelling |
| | (%) | (%) |
| Ex. 1 | 9 | 550 |
| Ex. 2 | 6 | 450 |
| Ex. 3 | 6 | 1100 |
| Ex. 4 | 4 | 520 |
| Comp. 1 | 92 | 78 |
| Comp. 2 | 90 | 94 |

The results in Table 2 show that the thin films obtained in Examples 1 to 4 had a small amount of elution, despite having a high degree of swelling. This confirmed that the copolymers obtained in Examples 1 to 4 were crosslinkable.

EXPLANATION OF CODES

10...positive electrode, 11...positive electrode mixture layer, 13...positive electrode current collector, 20...negative electrode, 21...negative electrode mixture layer, 23...negative electrode current collector, 30...electrolyte layer, 31...separator, 33... electrolytic solution, 100... battery.

## Claims

1. A resin composition comprising a copolymer, the copolymer comprising a constituent unit represented by a formula (1) below and 0.3 mol% or more and 20.0 mol% or less of a constituent unit represented by a formula (2) below,

[Formula 1]

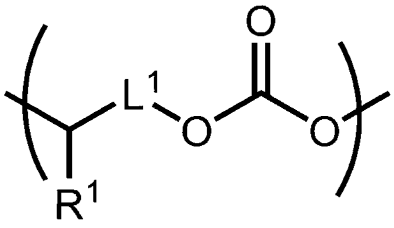

(1)

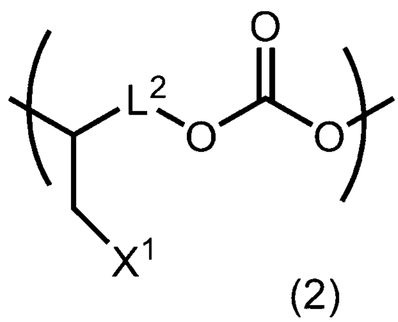

(2)

where, in the formulae (1) and (2):

R’ is a hydrogen atom or an alkyl group having 1 to 3 carbon atoms;
$L^1$ and $L^2$ are each independently a single bond or an alkylene group having 1 to 3 carbon atoms; and
$X^1$ is a reactive group selected from groups represented by a structural formula (2-1) and a structural formula (2-2) below,

[Formula 2]

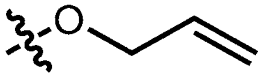

(2-1)

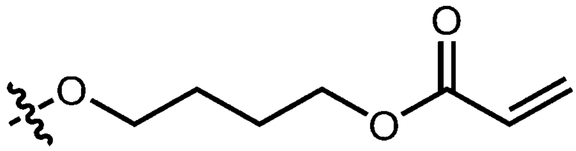

(2-2)

**2.** The resin composition according to claim 1, wherein
the copolymer further comprises at least one constituent unit selected from the group consisting of 0.1 mol% or more and 30.0 mol% or less of a constituent unit represented by a formula (3) below and a constituent unit represented by a formula (4) below,

[Formula 3]

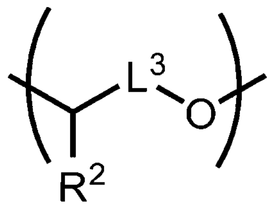

(3)

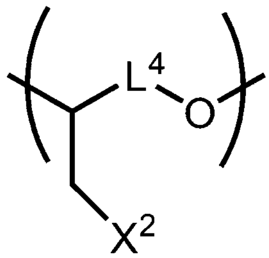

(4)

where, in the formulae (3) and (4):

$R^2$ is a hydrogen atom or an alkyl group having 1 to 3 carbon atoms;
$L^3$ and $L^4$ are each independently a single bond or an alkylene group having 1 to 3 carbon atoms; and
$X^2$ is a reactive group selected from groups represented by a structural formula (4-1) and a structural formula (4-2) below,

[Formula 4]

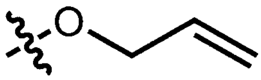

(4-1)

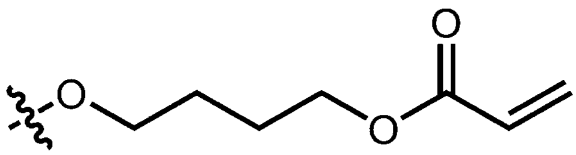

(4-2)

**3.** The resin composition according to claim 1 or 2, wherein

a cross-linked product of the resin composition has an amount of elution of the copolymer to ethyl acetate of 10% or less, and
a degree of swelling of the copolymer to a mixed solvent of ethylene carbonate and dimethyl carbonate in a volume ratio of 1:1 is 100% or more.

**4.** A binder resin comprising the resin composition according to claim 1 or 2.

**5.** A battery comprising the binder resin according to claim 4.

**6.** A polymer thin film comprising the resin composition according to claim 1 or 2.

**7.** A battery comprising the polymer thin film according to claim 6.

FIG.1

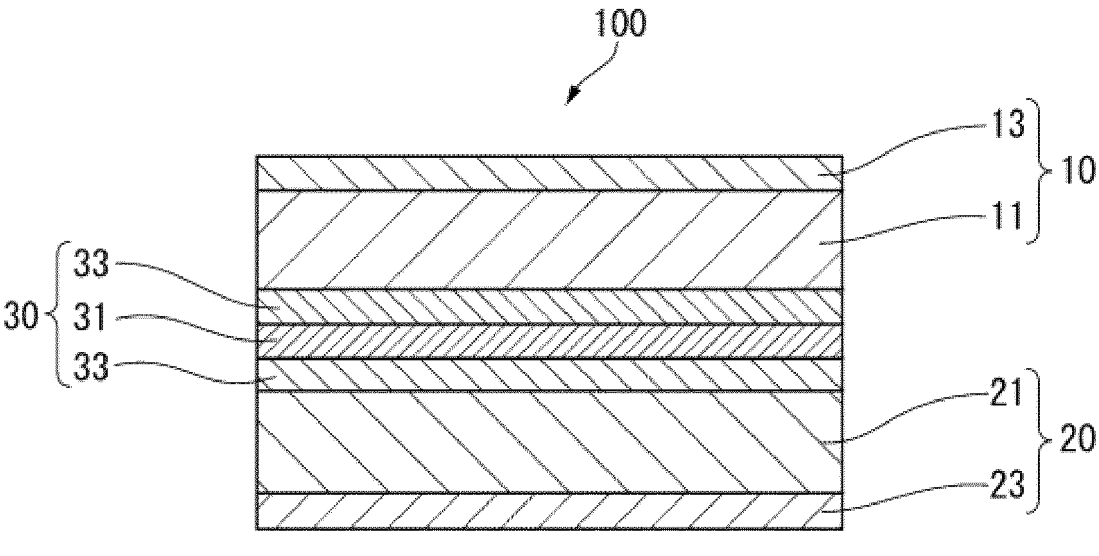

FIG.2

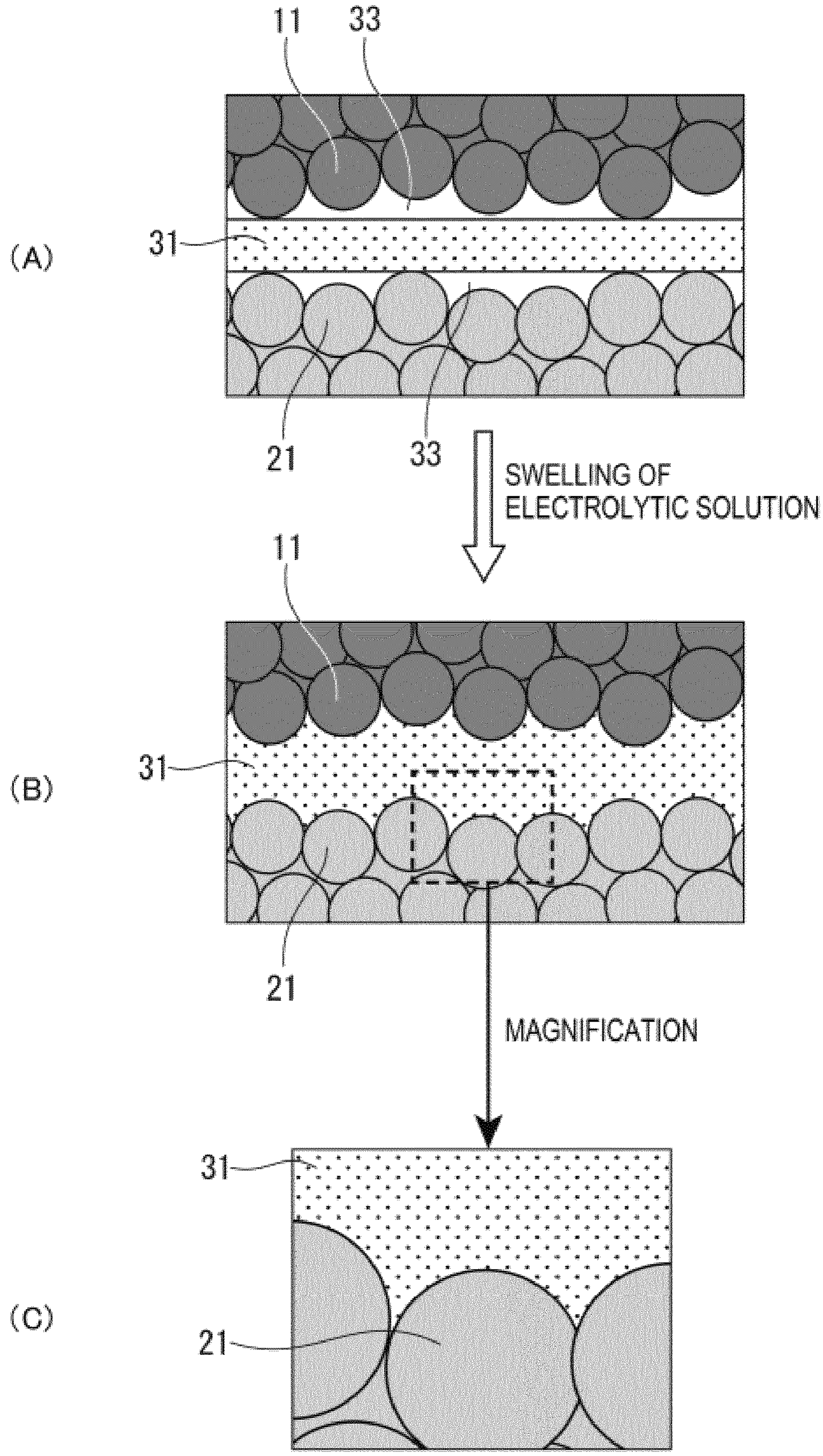
11
33
(A)
31
21
33
SWELLING OF
ELECTROLYTIC SOLUTION
11
(B)
31
21
MAGNIFICATION
31
(C)
21

FIG. 3

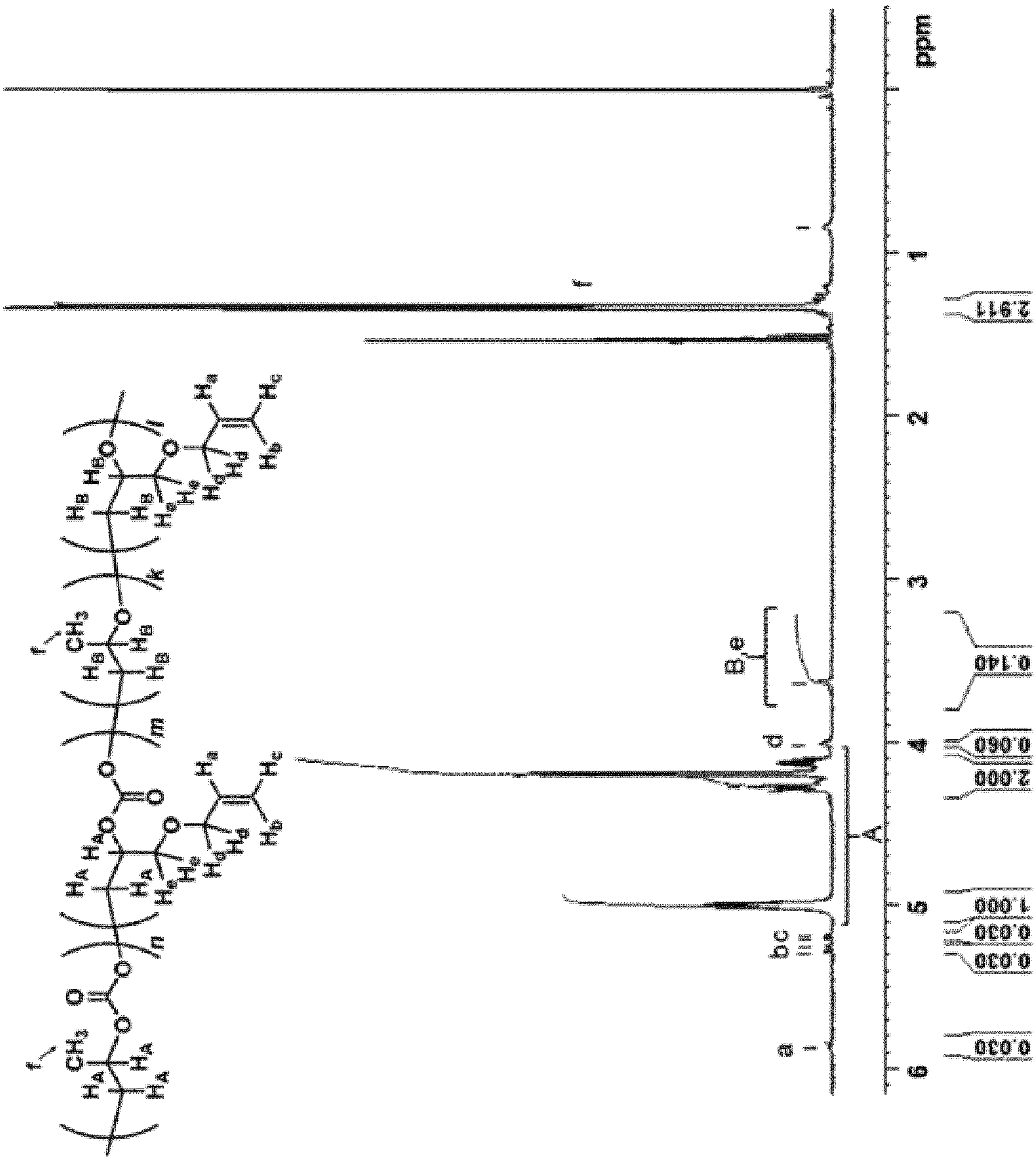

FIG. 4

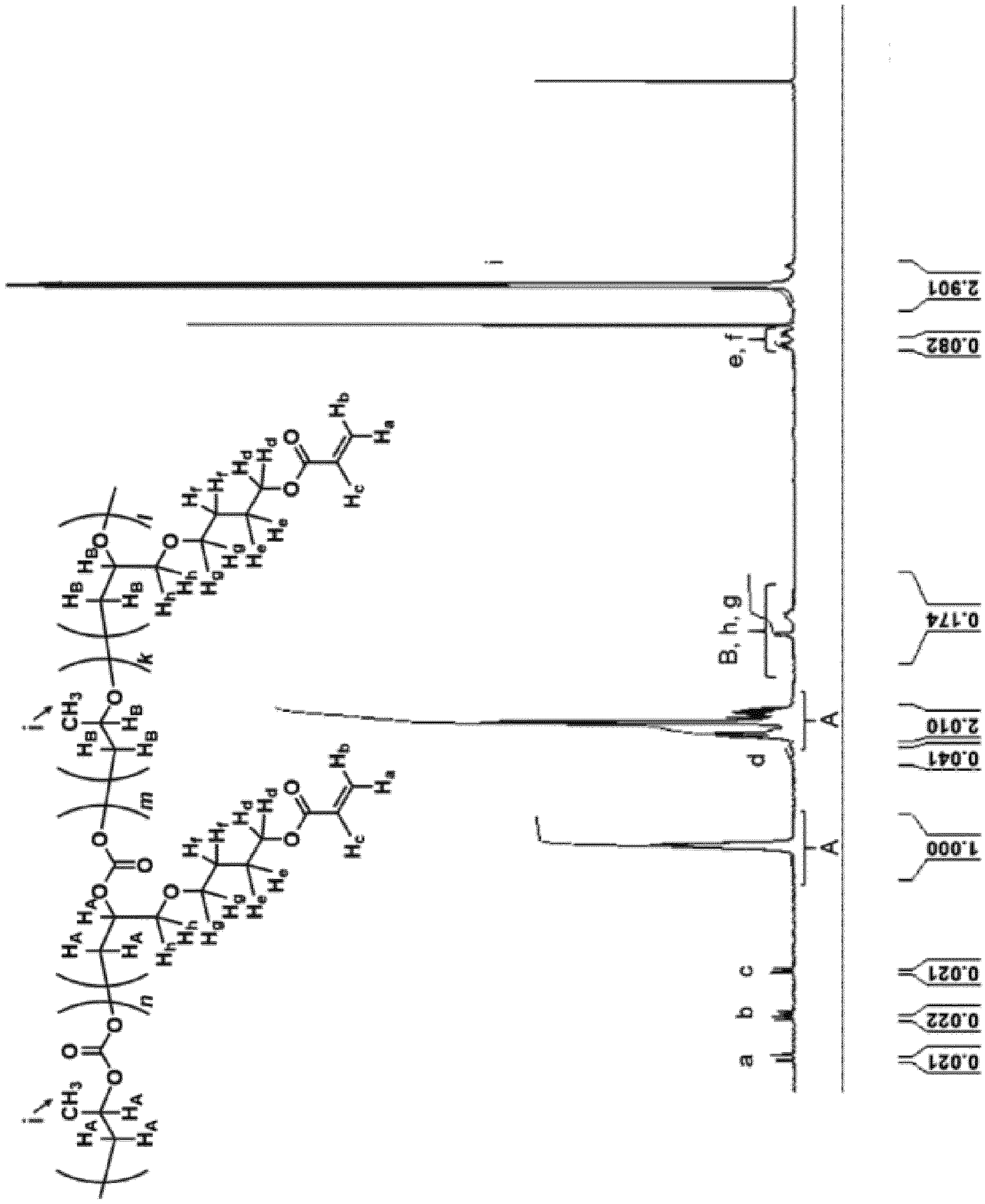

**INTERNATIONAL SEARCH REPORT**

International application No. **PCT/JP2024/010058**

**A. CLASSIFICATION OF SUBJECT MATTER**

***C08G 64/02***(2006.01)i; ***C08F 299/02***(2006.01)i; ***H01M 4/13***(2010.01)i; ***H01M 4/62***(2006.01)i; ***H01M 50/414***(2021.01)i
FI: C08G64/02; H01M4/13; H01M4/62 Z; H01M50/414; C08F299/02

According to International Patent Classification (IPC) or to both national classification and IPC

**B. FIELDS SEARCHED**

Minimum documentation searched (classification system followed by classification symbols)

C08G64/02; C08F299/02; H01M4/13; H01M4/62; H01M50/414

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 49-81498 A (NOK CORP.) 06 August 1974 (1974-08-06)<br>claims, examples | 1-4, 6<br>5, 7 |
| A | CN 1775828 A (CHANGCHUN APPLIED CHEMISTRY INST., CHINESE ACADEMY OF SCIENCES) 24 May 2006 (2006-05-24)<br>claims, examples | 1-7 |
| A | JP 2002-275234 A (NIPPON POLYURETHANE IND. CO., LTD.) 25 September 2002 (2002-09-25)<br>claims, examples | 1-7 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 June 2024** | **18 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

**INTERNATIONAL SEARCH REPORT**
**Information on patent family members**

International application No.
**PCT/JP2024/010058**

| Patent document cited in search report | Publication date (day/month/year) | Patent family member(s) | Publication date (day/month/year) |
| --- | --- | --- | --- |
| JP 49-81498 A | 06 August 1974 | (Family: none) | |
| CN 1775828 A | 24 May 2006 | (Family: none) | |
| JP 2002-275234 A | 25 September 2002 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2020203882 A